# EUROPÄISCHE PATENTSCHRIFT

(11) **EP 2 462 577 B1**
(45) Veröffentlichungstag und Bekanntmachung des Hinweises auf die Patenterteilung: **12.03.2014**
(21) Anmeldenummer: 11733554.7
(22) Anmeldetag: 23.03.2011
(51) Int. Cl.: G09B 9/00, G09B 9/30, G09B 9/05, G09B 9/042

(54) **VERFAHREN ZUR AUSBILDUNG EINES BESATZUNGSMITGLIEDS EINES INSBESONDERE MILITÄRISCHEN FAHRZEUGS**
METHOD FOR TRAINING A CREW MEMBER OF, IN PARTICULAR, A MILITARY VEHICLE
PROCÉDÉ POUR FORMER UN MEMBRE D'ÉQUIPAGE D'UN VÉHICULE, EN PARTICULIER D'UN VÉHICULE MILITAIRE

(30) Priorität: 24.03.2010 DE 102010016113
(43) Veröffentlichungstag der Anmeldung: 13.06.2012
(73) Patentinhaber: Krauss-Maffei Wegmann GmbH & Co. KG, 80997 München (DE)
(72) Erfinder: PABST, Manuel, 80997 München (DE); HAUBNER, Michael, 80997 München (DE)
(74) Vertreter: Feder Walter Ebert
(86) Internationale Anmeldenummer: PCT/DE2011/075046
(87) Internationale Veröffentlichungsnummer: WO 2011/116765

(56) Entgegenhaltungen:
- EP-A2- 0 947 797
- DE-U1-202006 018 390
- FR-A1- 2 889 754
- US-A- 4 884 137
- US-A- 6 166 744
- US-B2- 7 246 050

## Beschreibung

Die Erfindung betrifft ein Verfahren zur Ausbildung eines Besatzungsmitgliedes eines Fahrzeuges, insbesondere Militärfahrzeugs, im Fahrzeuginnenraum, wobei eine virtuelle Fahrzeugaußenumgebung erzeugt wird, sowie einen entsprechenden Fahrzeugsimulator zur Ausbildung eines Besatzungsmitglieds.

Um ein Fahrzeugbesatzungsmitglied auszubilden, ist es von Vorteil, dass die zu übende Handhabung des Fahrzeugs oder eines Teilsystems des Fahrzeugs in einer möglichst originalgetreuen Umgebung durchgeführt wird. Von besonderem Vorteil ist es insbesondere, wenn die Ausbildung in dem Fahrzeug selbst oder in einem dem Fahrzeug nachgebildeten Fahrzeuginnenraum stattfindet. Von Vorteil ist es weiterhin, wenn das Fahrzeug nicht tatsächlich in Bewegung gesetzt wird, sondern wenn die Fahrzeugaußenumgebung lediglich simuliert wird, da hierdurch das Fahrzeug, insbesondere die Antriebskomponenten, nicht Teil des Fahrzeugsimulators sein müssen. Ferner können über die Erzeugungen der virtuellen Realitäten ausbildungsrelevante Situationen gezielt simuliert werden.

Ein Verfahren zur Ausbildung eines Besatzungsmitgliedes eines Militärfahrzeuges wird in der EP 0 947 797 A2 beschrieben. Es wird hierbei offenbart, dass das Training der Panzerbesatzung in ortsfesten Simulatoren durchgeführt wird, wobei die Simulatoren die Originalpanzerfahrzeuge darstellen. Über einen Simulationsrechner wird eine virtuetle Fahrzeugaußenumgebung erschaffen, wobei diese Außenansicht auf drei Bildschirmen dargestellt wird.

Nachteilig an diesem Verfahren ist, dass bei modernen Fahrzeugen, insbesondere Militärfahrzeugen eine Vielzahl an Sichtfenstern vorhanden sind, wie zum Beispiel Front-, Seiten- oder Heckfenstern, Winkelspiegel oder sonstige Optiken, durch die das Besatzungsmitglied die Fahrzeugaußenumgebung sehen kann, so dass eine Vielzahl von Bildschirmen notwendig ist. Die Bildschirminhalte dieser die virtuelle Außenumgebung anzeigenden Bildschirme müssen zudem mit der Position und der Blickrichtung des Fahrschülers koordiniert werden, um einen höheren Grad an Realitätsnähe zu erreichen.

Bei dem aus der FR 2 889 754 A1 bekannten Verfahren trägt das Besatzungsmitglied eine kopffeste, den Fahrzeuginnenraum filmende Kamera sowie eine ebenfalls kopffeste, im Sichtfeld des Besatzungsmitglieds angeordnete Anzeigevorrichtung. Im Bereich um das Fahrzeug herum ist eine einfarbige Leinwand aufgestellt, welche aus dem Innenraum des Fahrzeugs heraus durch die Sichtfenster des Fahrzeugs sichtbar ist. In der Anzeigevorrichtung des Besatzungsmitglieds werden die Bereiche, in welchen die Leinwand sichtbar ist, mit der virtuellen Fahrzeugaußenumgebung überblendet. Dieses Verfahren bringt zwar den Vorteil mit sich, dass keine Bildschirme zur Anzeige der virtuellen Fahrzeugaußenumgebung erforderlich sind, allerdings erhöht die um das Fahrzeug herum aufgestellte Leinwand den Platzbedarf des Fahrzeugsimulators.

Die US 7 246 050 B2 offenbart einen Fahrzeugsimulator mit einem Fahrzeug, welches sich in Bewegung befindet. Das Besatzungsmitglied trägt eine kopffeste Kamera, welche die Umgebung aus dem Fahrzeuginnenraum filmt. Die reale Fahrzeugumgebung wird dem Besatzungsmitglied in einer kopffesten Anzeigevorrichtung angezeigt, wobei einzelne virtuelle Objekte in die reale Umgebung eingeblendet werden. Eine vollständige virtuelle Fahrzeugumgebung wird bei diesem Fahrzeugsimulator nicht erzeugt.

Aus der DE 20 2006 018 390 U1 ist ein Verfahren bekannt, durch welches einzelne, virtuelle Objekte präsentiert werden können. Die virtuellen Objekte werden in einer am Kopf eines Betrachters tragbaren Anzeigevorrichtung angezeigt. Zur Bestimmung der Position des Betrachters werden Marker verwendet, welche als Bildschirm ausgebildet sein können. Auch bei diesem Verfahren wird keine virtuelle Fahrzeugumgebung erzeugt.

Die Erfindung hat zur Aufgabe, die Anzahl der Bildschirme, welche die virtuelle Außenumgebung anzeigen, zu reduzieren und die Verwendung einer Leinwand zu vermeiden.

Die Erfindung löst die Aufgabe verfahrensmäßig mit den Merkmalen aus dem Patentanspruch 1. Ein erfindungsgemäßer Simulator ist Bestandteil des Patentanspruches 16. Vorteilhafte Weiterbildungen sind Bestandteil der abhängigen Ansprüche.

Das erfindungsgemäße Ausbildungsverfahren sieht vor, dass das Besatzungsmitglied eine kopffeste, den Fahrzeuginnenraum filmende Kamera sowie eine kopffeste, im Sichtfeld des Besatzungsmitglieds angeordnete Anzeigevorrichtung trägt.

Erfindungsgemäß ist ferner im Fahrzeuginnenraum ein insbesondere planarer Marker angeordnet, über den die Position eines Ausblickes definiert wird, wobei an der Position des Ausblickes ein von der Position und Blickrichtung des Besatzungsmitglieds abhängiger Ausschnitt der virtuellen Fahrzeugaußenumgebung in der Anzeigevorrichtung eingeblendet wird. Die virtuelle Außenumgebung braucht somit nicht mehr über eine oder mehrere Anzeigevorrichtungen angezeigt zu werden, da die virtuelle Außenumgebung lediglich überlagernd in der sich im Sichtfeld des Besatzungsmitglieds befindenden Anzeigevorrichtung an die Ausblick-Positionen eingeblendet wird, die durch den oder die Marker im Fahrzeuginnenraum definiert werden. Durch den Marker ist es somit möglich, im Fahrzeuginnenraum eine Stelle zu markieren, an der ein Ausblick für den Fahrschüler angeordnet sein soll.

Gemäß einer bevorzugten Ausgestaltung wird auf der Anzeigevorrichtung das Kamerabild dargestellt und der Ausschnitt der virtuellen Fahrzeugaußenumgebung in das Kamerabild eingeblendet. Das Besatzungsmitglied sieht somit mittels der Kamera und der Anzeigevorrichtung den Fahrzeuginnenraum. In vorteilhafter Weise sollte diese Zwischenschaltung der Anzeigevorrichtung die Sicht des Besatzungsmitgliedes so wenig wie möglich beeinträchtigen, das helßt, das Besatzungsmitglied sollte so wenig wie möglich wahrnehmen, dass er den Fahrzeuginnenraum nicht unmittelbar durch seinen eigenen Augen, sondern durch Zwischenschaltung der Kamera und der Anzeigevorrichtung sieht. Der Fahrzeuginnenraum stellt den Ausbildungsraum dar.

Alternativ kann die Anzeigevorrichtung teiltransparent ausgebildet sein, so dass das Besatzungsmitglied den Fahrzeuginnenraum durch die Anzeigevorrichtung hindurch wahrnehmen kann, wobei an der Position des Ausblicks ein Ausschnitt der virtuellen Fahrzeugaußenumgebung eingeblendet wird.

Die Anzeigevorrichtung und oder die Kamera können Teil eines sogenannten Head Mounted Display (HMD, "am Kopf befestigte Anzeige") sein, welche kommerziell erhältlich sind.

Eine besonders realistische Ausbildungssituation ergibt sich, wenn der Marker auch an der Position eines im Fahrzeuginnenraum realen Ausblicks angeordnet ist, so dass dem Besatzungsmitglied eine Fahrzeugbenutzung simuliert wird, bei der der lediglich virtuell eingeblendete Ausblick auch an der Stelle ist, an der er sich im realen Fahrzeug tatsächlich befindet. An der Position des Ausblickes kann somit die Position eines realen Sichtfensters, insbesondere eines Winkelspiegels oder Außenfensters des Fahrzeugs sein.

Besonders bevorzugt ist der Marker auf dem realen Sichtfenster selbst angeordnet, insbesondere aufgeklebt. Dadurch kann erreicht werden, dass der Marker im Bild des Besatzungsmitgliedes nicht sichtbar ist, da an dieser Position das virtuelle Bild der Außenumgebung eingeblendet wird.

In einer besonders bevorzugten Ausgestaltung wird die Blickrichtung und/oder die relative Position des Besatzungsmitgliedes mittels des Markers ermittelt. Hierbei kann beispielsweise der Marker mit der Kamera derart zusammenwirken, dass über ein insbesondere optisches Tracking-Verfahren die relative Lage der Kamera zum Marker insbesondere mittels eines Rechners ermittelt wird, woraus sich die Blickrichtung, insbesondere die Kopfrichtung, und/oder die Position des Besatzungsmitgliedes ergibt.

Ferner kann bei einer besonders bevorzugten Ausgestaltung die Blickrichtung und/oder die absolute Position des Besatzungsmitgliedes und/oder des Kopfes ermittelt werden. Hierzu kann ein insbesondere zusätzlicher Kopfbewegungssensor, insbesondere ein Inertialsensor, verwendet werden. Falls der Kopfbewegungssensor zusätzlich zum Tracking-Verfahren (tracking: verfolgen) eingesetzt wird, erhöht sich die Schnelligkeit und Genauigkeit des Systems. Zudem wird eine verbesserte Darstellung der virtuellen Außenwelt erzeugt.

Für eine möglichst realistische Darstellung des Fahrzeuginnenraumes auf der Anzeigenvorrichtung sollte die Kamera auf der Höhe der Augen des Besatzungsmitglieds angeordnet sein. Bevorzugt wird für jedes Auge des Besatzungsmitgliedes eine Kamera verwendet. Die Anzeigevorrichtung kann zudem in der Lage sein, ein stereoskopisches Bild darzustellen, so dass die Realitätsnähe erhöht wird.

Falls mehrere Ausblicke im Fahrzeug vorhanden sind, kann diesen Positionen jeweils ein Marker zugeordnet werden, so dass auf jedem Ausblick ein Ausschnitt der virtuellen Fahrzeugaußenumgebung dargestellt werden kann.

Die Realitätsnähe kann ferner dadurch erhöht werden, dass das Sichtfeld des Besatzungsmitgliedes vollständig überdeckt ist. Hierzu kann die Anzeigevorrichtung als opake Brille, insbesondere Datenbrille, ausgestaltet sein.

Der oder die Marker können derart ausgestaltet sein, dass eine eindeutige Zuordnung zwischen dem Marker und dem Ausblick gegeben ist, sowie eine eindeutige Lage zwischen Kamera und Marker. Der Marker kann ein Codemuster tragen, beispielsweise durch Aufdruck, wobei dieses Codemuster vorzugsweise schachbrettartig ausgestaltet ist. Bevorzugt wird ein flächiger Marker, beispielsweise ein Papiermarker, verwendet. Es könnten auch bekannte Marker mit mehreren Kugeln verwendet werden, wobei über Lage der Kugeln die Position des Ausblicks festgelegt wird.

Einzelne Komponenten von Ausgestaltungen der Erfindung sind im Stand der Technik bekannt und können bei der Erfindung verwendet werden. Ein Head Mounted Display wird beispielsweise in der US 4,884,137 beschrieben. Eine Möglichkeit der Zusammenführung von realen und virtuellen Bilddaten wird beispielsweise in der US 6,166,744 beschrieben. Ein flächiger Marker mit einem Codemuster wird beispielsweise in der DE 10 2004 046 144 A1 beschrieben. Tracking-Verfahren werden beispielsweise in der DE 10 2007 060 263 A1 oder in der DE 10 2005 011 616 A1 beschrieben, wobei letztere gleichfalls einen Papiermarker mit einem Codemuster offenbart.

Ein erfindungsgemäßer Fahrzeugsimulator zur Ausbildung eines Besatzungsmitgliedes eines Fahrzeuges, insbesondere eines Militärfahrzeuges, im Fahrzeuginnenraum weist einen eine virtuelle Fahrzeugaußenumgebung erzeugenden Rechner auf, wobei er zudem eine vom Besatzungsmitglied kopffest tragbare, den Fahrzeuginnenraum filmende Kamera und eine vom Besatzungsmitglied kopffest tragbare im Sichtfeld des Besatzungsmitglieds anordbare Anzeigevorrichtung, umfasst, sowie ferner einen im Fahrzeuginnenraum anordbaren Marker, der eine Position eines Ausblicks definiert, wobei mittels des Rechners an der Position des Ausblicks ein von der Position und Blickrichtung des Besatzungsmitglieds abhängiger Ausschnitt der virtuellen Fahrzeugaußenumgebung in der Anzeigevorrichtung einblendbar ist. Der Fahrzeugsimulator ist somit derart ausgestaltet, dass er das bereits beschriebene erfindungsgemäße Verfahren ausführen kann.

Im Übrigen sind auch die bereits beschriebenen vorteilhaften Weiterbildungen des erfindungsgemäßen Verfahrens in gleicher Weise bei dem erfindungsgemäßen Fahrzeugsimulator einsetzbar.

Die Ausbildung im Fahrzeug kann sich auf sämtliche Komponenten des Fahrzeugs beziehen, also beispielsweise auf das Fahrsystem, Waffensystem und/oder Kommunikationssystem, so dass beispielsweise das Fahren, Schießen und/oder Kommandieren insbesondere auch unabhängig voneinander geübt werden können.

Ein vorteilhaftes Ausführungsbeispiel der Erfindung wird anhand der Figuren 1 bis 4 beschrieben. Es zeigen:
- Fig. 1: ein Kampffahrzeug als Fahrzeugsimulator;
- Fig. 2: ein Head Mounted Display;
- Fig. 3: ein von einer Person getragenes Head Mounted Display;
- Fig. 4: einen Ausschnitt des Fahrzeugsimulators nach Fig. 1 in einer schematischen Darstellung.

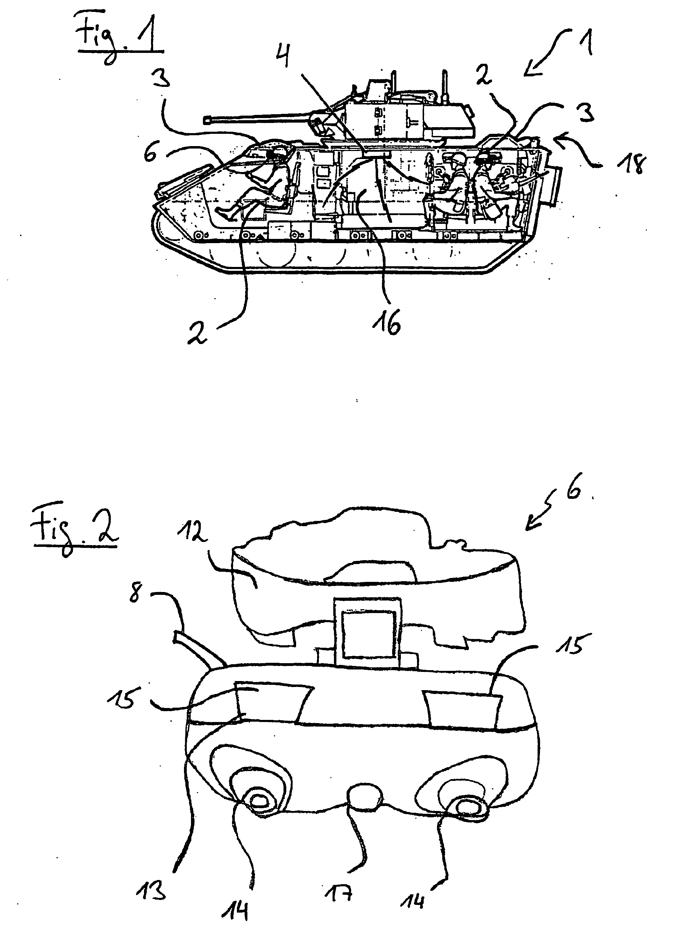

Die Fig. 1 zeigt ein Kampffahrzeug 1 als militärisches Fahrzeug 1, in welchem Besatzungsmitglieder 2 zu Ausbildungszwecken im Fahrzeuginnenraum 16 angeordnet sind. Der Kampfpanzer 1 stellt hierbei einen Original-Kampfpanzer dar, welcher zu Ausbildungszwecken nutzbar ist. Da das Fahrzeug 1 allerdings während der Ausbildung nicht bewegt werden muss, können einzelne, insbesondere sich bewegende Teile weggelassen sein. Der Fahrzeuginnenraum 16 sollte dann aber dem Originalfahrzeug entsprechen.

Das Fahrzeug 1 weist mehrere Ausblicke in Form von Winkelspiegeln 3 auf, durch die die Besatzungsmitglieder 2 im Originalfahrzeug 1 die reale Außenumgebung 18 betrachten könnten. Im Ausbildungsbetrieb des Fahrzeugs 1 soll an die Stelle der Sichtfenster der Ausblicke 3 ein Ausschnitt einer virtuellen Fahrzeugaußenumgebung eingeblendet werden. Zur Erzeugung der virtuellen Außenumgebung dient ein Simulationsrechner 4, welcher innerhalb des Fahrzeugs 1 angeordnet sein kann und zudem mit dem Fahrzeugsystemrechner gekoppelt sein kann, damit die reale Fahrzeugbedienung mit der Simulation gekoppelt werden kann. Zur Anzeige der virtuellen Fahrzeugaußenumgebung anstelle der realen Außenumgebung 18 dient ein Head Mounted Display (HMD) 6, welches jeweils von den auszubildenden Beatzungsmitgliedern 2 getragen wird.

Die virtuelle Fahrzeugaußenumgebung ist eine durch den Rechner 4 erzeugte Darstellung einer fiktiven, dreidimensionalen Umgebung des Fahrzeugs 1, welche ausschließlich computergenerierte Elemente umfasst. Ein Ausschnitt der virtuellen Fahrzeugaußenumgebung ist dabei ein Teilbereich der gesamten virtuellen Fahrzeugaußenumgebung, welcher der Sicht eines Betrachters der virtuellen Fahrzeugaußenumgebung in einer Raumrichtung oder durch einen Ausblick 3 des Fahrzeugs, insbesondere ein Sichtfenster oder ein Sichtgerät, entspricht.

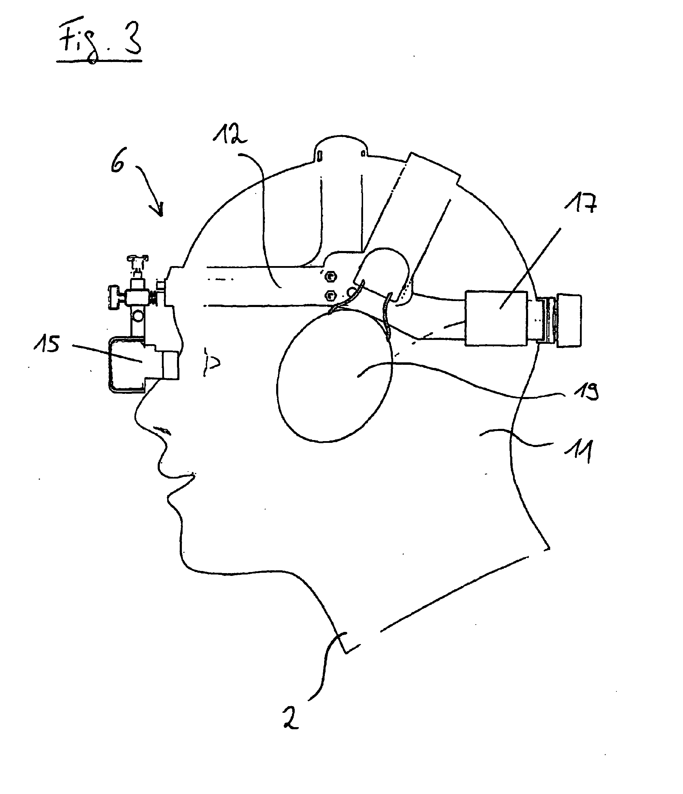

Die Fig. 2 und 3 zeigen verschiedene Ausgestaltungen eines Head Mounted Displays 6, welches als Datenbrille 13 ausgestaltet ist und mittels einer Befestigungsvorrichtung 12, beispielsweise einem flexiblen Band, am Kopf 11 der Auszubildenden 2 befestigt werden kann. Das Head Mounted Display 6 weist ferner eine Anzeigevorrichtung 15 auf, welche aus zwei Monitoren besteht, die jeweils vor einem Auge des Besatzungsmitglieds 2 liegen.

Das Head Mounted Display 6 weist ferner an der Brille 13 angeordnete Kameras 14 auf, die jeweils vor einem Auge des Besatzungsmitglieds 2 angeordnet sind, so dass eine stereoskopische Bilddarstellung auf den Anzeigevorrichtungen 15 möglich ist. Die Kameras 14 sowie die Anzeigevorrichtungen 15 sind somit kopffest, d.h. sie folgen einer Lageänderung oder Bewegung des Kopfes 11 des Besatzungsmitgliedes 2.

Wenn ein Besatzungsmitglied 2 das kopffeste Head Mounted Display 6 trägt, so werden ihm die Kamerabilder des Fahrzeuginnenraumes 16 der Kameras 14 möglichst ohne Zeitverzögerung auf die Anzeigevorrichtungen 15 eingespielt, so dass er das Tragen der Datenbrille 13 kaum wahrnimmt. Er sieht somit den Fahrzeuginnenraum über die Zwischenschaltung der Kamera 14.

Das Head Mounted Display 6 weist ferner einen als Inertialsensor ausgestalteten Kopfsensor 17 mit drei Freiheitsgraden auf, über den die Blickrichtung des Kopfes 11 ermittelt werden kann. Der Kopfsensor weist einen Kompass auf, um die Gier-Richtung absolut messen zu können. Ferner kann ein Kopfhörer 19 vorgesehen sein.

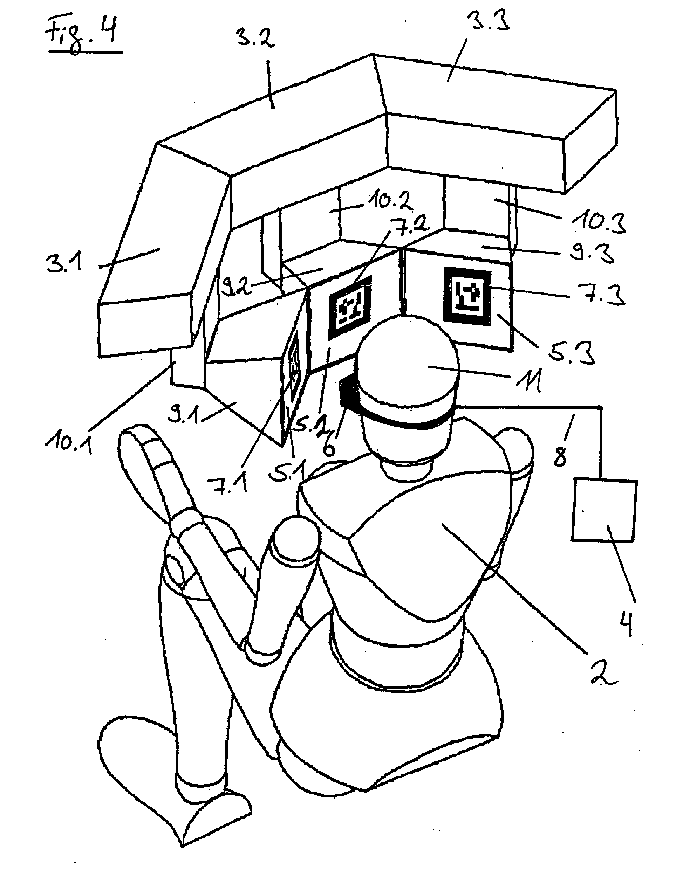

Die Datenverbindung zwischen Anzeigevorrichtung 15 und Rechner 4 bzw. Kamera 14 und Rechner 4 kann, wie in Fig. 1 dargestellt, kabellos per Funk oder, wie in den Fig. 2 und 4 dargestellt, mittels eines Datenkabels 8 erfolgen.

Die Fig. 4 zeigt in einer schematischen Darstellung den Ausbildungsplatz im Fahrzeuginnenraum 16 des Fahrzeugs 1 nach der Fig. 1. Das Besatzungsmitglied 2 sitzt vor drei Winkelspiegeln, die jeweils bestehen aus einem Ausblickteil 3.1, 3.2, 3.3, einem Glasblock 10.1, 10.2, 10.3, der durch das Fahrzeugdach führt, und einem Einblickteil 9.1, 9.2, 9.3, die jeweils ein Sichtfenster 5.1, 5.2, 5.3, aufweisen, durch die das Besatzungsmitglied im Normalbetrieb, d.h. im Nicht-Ausbildungsbetrieb, die Fahrzeugaußenumgebung 18 beobachten kann.

Das Ausbildungsverfahren erfolgt bei unbewegtem Fahrzeug. Im Simulationsbetrieb soll an der Stelle der Sichtfenster 5.1, 5.2, 5.3 ein Ausschnitt der vom Rechner 4 simulierten virtuellen Außenumgebung dargestellt werden. Hierzu werden auf die Sichtfenster 5.1, 5.2, 5.3 flächige Papiermarker geklebt, die ein einzigartiges schachbrettartiges Codemuster tragen. Über die Kamera 14 des Head Mounted Display 6 kann mittels eines im Rechner 4 installierten Tracking-Verfahrens innerhalb des Kamerabildes des Fahrzeuginnenraumes 16 die Position der Marker ermittelt und verfolgt werden, so dass an diese Stelle entsprechend der Position und Blickrichtung des Besatzungsmitglieds 2 ein Ausschnitt der im Rechner 4 erzeugten virtuellen Fahrzeugaußenumgebung in das Kamerabild eingeblendet werden kann. Das Besatzungsmitglied 2 sieht somit über die Kameras 14 und die Anzeigevorrichtungen 15 den Fahrzeuginnenraum 16, wobei an die Stellen der Marker 7.1, 7.2, 7.3 eine simulierte Außenumgebung eingeblendet wird.

Die Marker 7.1, 7.2, 7.3 definieren somit die Positionen der Ausblicke während der Ausbildung des Besatzungsmitgliedes 2. Bei einer Änderung der Position des Besatzungsmitgliedes 2 bzw. von dessen Blickrichtung wird mittels des Tracking-Verfahrens über die Marker 7.1, 7.2, 7.3 und die Kameras 14 der Ausschnitt der virtuellen Fahrzeugaußenumgebung entsprechend nachgeführt und verändert.

Bei dem Ausbildungsverfahren sieht die Besatzung 2 nicht die reale Umgebung 18 des Fahrzeugs 1, sondern die virtuelle Umgebung, die als vollständige Simulation einer Außenumgebung dient. An die durch die Marker 7.1, 7.2, 7.3 defi-nierten Positionen wird den Auszubildenden 2 somit eine vollständig fiktive Umgebung angezeigt, die zu Übungszwecken erzeugt und gesteuert werden kann.

Mittels der Erfindung kann somit auf die Verwendung von Monitoren innerhalb des Fahrzeugs verzichtet werden. Es wird die Anzahl der benötigten, die virtuelle Umgebung anzeigenden Vorrichtungen auf lediglich die Anzeigevorrichtung 15 im Head Mounted Display 6 reduziert.

Es wird dem Besatzungsmitglied 2 eine virtuelle Außensicht über das Head Mounted Display 6 vorgespielt, wodurch er Übungen, beispielsweise auch Gefechtsübungen, in dieser künstlichen Realität durchführen kann. Um zu gewährleisten, dass der Benutzer 2 den Eindruck hat, auf tatsächlich vorhandene Sichtfenster 5.1, 5.2, 5.3 eines Winkelspiegels oder Außenfensters zu schauen, sollte der Bildinhalt den Kopfbewegungen angepasst werden. Dies wird über ein Head Tracking System unterstützt, welches den am Kopf montierbaren Inertialsensor 17 umfasst, durch den eine absolute Rotation des Kopfes 11 des Benutzers erfasst werden kann.

Es wird dem Benutzer 2 ermöglicht, die reale Welt durch das Head Mounted Display zu sehen, in dem ihm das Bild der am Head Mounted Display 6 montierten Tracking-Kameras 14 auf den Anzeigevorrichtungen 15 des Head Mounted Display angezeigt wird. Hierbei würde zwar zunächst in diesem Szenario die Kamerasicht auf die virtuelle Umgebung verdecken. Mittels der auch als Stencil bekannten Technik kann das Kamerabild, das über dem virtuellen Bild liegt, an dieser Stelle ausgestanzt und somit durchsichtig gemacht werden. Dies sollte genau an der Position geschehen, an der das optische Tracking im Kamerabild einen Marker 7.1, 7.2, 7.3 erkennt, wobei Offsets in Position oder Rotation zu der des Markers programmiert werden können. Die Form der Ausstanzung ist hierbei frei definierbar von Größe und Form des Markers 7.1, 7.2, 7.3. Die Position und Lage im Raum passt sich zur Laufzeit der des Markers 7.1, 7.2, 7.3 an. Da die Marker 7.1, 7.2, 7.3 durch ihre unterschiedlichen Codemuster für das System unterscheidbar sind, können für verschiedene Marker 7.1, 7.2, 7.3 auch verschiedene Stanzformen benutzt werden.

Durch eine Bewegung des Kopfes 11 vor beispielsweise einem mit einem Marker 7.1, 7.2, 7.3 versehenen Sichtfenster 5.1, 5.2, 5.3 verändert sich auch das virtuelle Sichtfenster in seiner Lage im Raum. Kommt der Benutzer 2 ihm näher, wird er größer, und er sieht einen größeren Ausschnitt der virtuellen Außenumgebung. Betrachtet der Benutzer 2 ihn stark von der Seite, wird der Einblickswinkel flach, genau wie dies auch bei einem realen Sichtfenster der Fall wäre. Die virtuelle Welt, die der Benutzer 2 durch dieses virtuelle Fenster betrachtet, wird entsprechend der Ausrichtung des Kopfsensors 17 dargestellt. So neigt sich beispielsweise der virtuetle Horizont, wenn sich der Kopf 11 des Benutzers neigt, wobei Drehungen des Kopfes 11 in der realen Welt auch eine entsprechende Blickrichtung in der virtuellen Welt zur Folge hat.

Mit dem Marker-Verfahren wird zunächst die Position der Marker vor dem Benutzer, nicht aber die Position des Benutzers 2 im Raum erfasst. Hierzu ist ein System zur absoluten Lageerkennung notwendig. Eine Möglichkeit wäre, dies über die Marker zu realisieren, wobei hierzu die genauen Positionen und Ausrichtungen der Marker 7.1, 7.2, 7.3 zueinander bekannt sein müssten, was sich mittels einer Vermessung erreichen lässt. Den Aufwand der Vermessung lässt sich allerdings durch die Verwendung des kopffesten Inertialsensors 17 einsparen.

Ein vernachlässigbarer Nachteil in dem vorgestellten Betriebsmodus ist, dass sich eine Positionsänderung des Benutzers nur auf die Position des Sichtfensters 5.1, 5.2, 5.3 nicht aber auf seine Position in der virtuellen Welt auswirkt. Insofern ist das Verfahren bevorzugt bei solchen Ausbildungsplätzen anwendbar, bei denen der Auszubildende 2 sitzt und somit seine Position nicht in höherem Maße verändert.

Durch eine Umschaltbarkeit auf eine virtuelle Vollbild-Sicht im Head Mounted Display 6, bei der auf der Anzeigevorrichtung 15 ausschließlich virtuelle Bilder dargestellt werden, können zudem Simulationsszenarien realisiert werden, bei dem sich der Auszubildende 2 virtuell außerhalb des Fahrzeugs 1 befindet, z.B. "Über-Luke" oder "Abgesessen", sich allerdings real weiterhin im Fahrzeug 1 befindet.

In einer Abwandlung des Ausführungsbeispiels kann die Anzeigevorrichtung 15 teilweise transparent ausgebildet sein. In diesem Fall ist es nicht erforderlich, das von der Kamera 14 aufgenommene Bild des Fahrzeuginnenraums auf der Anzeigevorrichtung 15 darzustellen. Vielmehr kann das Besatzungsmitglied den Fahrzeuginnenraum unmittelbar durch die teilweise transparente Anzeigevorrichtung 15 wahrnehmen. Zur Darstellung der virtuellen Fahrzeugaußenumgebung werden anhand der Kamera 14 die Positionen der Marker 7.1, 7.2, 7.3 ermittelt. An den Stellen der Marker 7.1, 7.2, 7.3 werden Ausschnitte der virtuellen Fahrzeugaußenumgebung in der Anzeigevorrichtung 15 eingeblendet, wobei die übrigen Bereiche in der Anzeigevorrichtung 15 transparent sind.

### Bezugszeichen:

- 1: Fahrzeug
- 2: Besatzungsmitglied
- 3: Winkelspiegel
- 4: Rechner
- 5: Sichtfenster
- 6: Head Mounted Display
- 7: Marker
- 8: Datenverbindung
- 9: Einblickteil
- 10: Glasblock
- 11: Kopf
- 12: Befestigungsmittel
- 13: Datenbrille
- 14: Kamera
- 15: Anzeigevorrichtung
- 16: Fahrzeuginnenraum
- 17: Inertialsensor
- 18: reale Fahrzeugaußenumgebung
- 19: Kopfhörer

## Patentansprüche

1. Verfahren zur Ausbildung eines Besatzungsmitglieds (2) eines Fahrzeugs (1), insbesondere Militärfahrzeugs, im Fahrzeuginnenraum (16), wobei eine virtuelle Fahrzeugaußenumgebung erzeugt wird, wobei das Besatzungsmitglied (2) eine kopffeste, den Fahrzeuginnenraum (16) filmende Kamera (14) und eine kopffeste, im Sichtfeld des Besatzungsmitglieds angeordnete Anzeigevorrichtung (15) trägt, und wobei an der Position eines Ausblicks (5.1, 5.2, 5.3) ein von der Position und Blickrichtung des Besatzungsmitglieds (2) abhängiger Ausschnitt der virtuellen Fahrzeugaußenumgebung in der Anzeigevorrichtung (15) eingeblendet wird, **dadurch gekennzeichnet,**
**dass** über einen im Fahrzeuginnenraum (16) angeordneten Marker (7.1, 7.2, 7.3) die Position des Ausblicks (5.1, 5.2, 5.3) definiert wird.

2. Verfahren nach Anspruch 1, **dadurch gekennzeichnet, dass** auf der Anzeigevorrichtung (15) das Kamerabild dargestellt wird und dass der Ausschnitt der virtuellen Fahrzeugaußenumgebung in das Kamerabild eingeblendet wird.

3. Verfahren nach Anspruch 1, **dadurch gekennzeichnet, dass** die Anzeigevorrichtung (15) teilweise transparent ausgebildet ist.

4. Verfahren nach einem der vorhergehenden Ansprüche, **dadurch gekennzeichnet, dass** die Anzeigevorrichtung (15) und/oder die Kamera (14) Teil eines Head Mounted Displays (6) ist.

5. Verfahren nach einem der vorhergehenden Ansprüche, **dadurch gekennzeichnet, dass** der Marker (7.1, 7.2, 7.3) an der Position des Ausblicks (5.1, 5.2, 5.3) angeordnet ist.

6. Verfahren nach einem der vorhergehenden Ansprüche, **dadurch gekennzeichnet, dass** die Position des Ausblicks an der Position eines realen Sichtfensters (5.1, 5.2, 5.3), insbesondere eines Winkelspiegels (9.1, 9.2, 9,3) oder Außenfensters, des Fahrzeugs (1) liegt.

7. Verfahren nach einem der vorhergehenden Ansprüche, **dadurch gekennzeichnet, dass** der Marker (7.1, 7.2, 7.3) auf dem Sichtfenster (5.1, 5.2, 5.3) angeordnet, insbesondere aufgeklebt, ist.

8. Verfahren nach einem der vorhergehenden Ansprüche, **dadurch gekennzeichnet, dass** die Blickrichtung und die Position des Besatzungsmitglieds (2) über einen Kopfbewegungssensor (17), insbesondere Inertialsensor, ermittelt wird.

9. Verfahren nach einem der vorhergehenden Ansprüche, **dadurch gekennzeichnet, dass** die Kamera (14) auf der Höhe der Augen des Besatzungsmitglieds (2) angeordnet ist.

10. Verfahren nach einem der vorhergehenden Ansprüche, **dadurch gekennzeichnet, dass** für jedes Auge des Besatzungsmitglieds (2) eine Kamera (14) verwendet wird.

11. Verfahren nach einem der vorhergehenden Ansprüche, **dadurch gekennzeichnet, dass** die Anzeigevorrichtung (14) ein stereoskopisches Bild darstellt.

12. Verfahren nach einem der vorhergehenden Ansprüche, **dadurch gekennzeichnet, dass** an den Positionen von mehreren Ausblicken (5.1, 5.2, 5.3) jeweils ein Ausschnitt der virtuellen Fahrzeugaußenumgebung dargestellt wird, wobei jeder Position ein Marker (7.1, 7.2, 7.3) zugeordnet ist.

13. Verfahren nach einem der vorhergehenden Ansprüche, **dadurch gekennzeichnet, dass** die Anzeigevorrichtung (15) das Sichtfeld des Besatzungsmitglieds (2) vollständig überdeckt.

14. Verfahren nach einem der vorhergehenden Ansprüche, **dadurch gekennzeichnet, dass** der Marker (7.1, 7.2, 7.3) ein Codemuster trägt.

15. Verfahren nach einem der vorhergehenden Ansprüche, **dadurch gekennzeichnet, dass** das Codemuster schachbrettartig ist.

16. Fahrzeugsimulator zur Ausbildung eines Besatzungsmitglieds (2) eines Fahrzeugs (1), insbesondere Militärfahrzeugs, im Fahrzeuginnenraum (16), mit einem eine virtuelle Fahrzeugaußenumgebung erzeugenden Rechner (4), eine vom Besatzungsmitglied (2) kopffest tragbare, den Fahrzeuginnenraum (16) filmende Kamera (14) und eine vom Besatzungsmitglied (2) kopffest tragbare, im Sichtfeld des Besatzungsmitglieds (2) anordbare Anzeigevorrichtung (15), wobei mittels des Rechners (4) an der Position eines Ausblicks (5.1, 5.2, 5.3) ein von der Position und Blickrichtung des Besatzungsmitglieds (2) abhängiger Ausschnitt der virtuellen Fahrzeugaußenumgebung in der Anzeigevorrichtung (15) einblendbar ist, **gekennzeichnet durch** einen im Fahrzeuginnenraum anordbaren Marker (7.1, 7.2, 7.3), der eine Position eines Ausblicks (5.1, 5.2, 5.3) definiert.

17. Fahrzeugsimulator nach Anspruch 16, **gekennzeichnet durch** die Merkmale des kennzeichnenden Teils von einem oder mehreren der Patentansprüche 2 bis 15.

## Claims

1. Method for training a crew member (2) of a vehicle (1), in particular a military vehicle, in the vehicle interior (16), wherein a virtual vehicle external environment is created, wherein the crew member (2) wears a head-mounted camera (14) filming the vehicle interior (16) and a head-mounted display device (15) arranged in the crew member's field of vision, and wherein at the position of a view (5.1, 5.2, 5.3), a section of the virtual vehicle external environment that depends on the position and viewing direction of the crew member (2) is faded in in the display device (15), **characterised in that** the position of the view (5.1, 5.2, 5.3) is defined via a marker (7.1, 7.2, 7.3) arranged in the vehicle interior (16).

2. Method according to claim 1, **characterised in that** the camera image is shown on the display device (15) and that the section of the virtual vehicle external environment is faded into the camera image.

3. Method according to claim 1, **characterised in that** the display device (15) is formed partially transparently.

4. Method according to one of the preceding claims, **characterised in that** the display device (15) and/or the camera (14) is part of a head-mounted display (6).

5. Method according to one of the preceding claims, **characterised in that** the marker (7.1, 7.2, 7.3) is arranged at the position of the view (5.1, 5.2, 5.3).

6. Method according to one of the preceding claims, **characterised in that** the position of the view is at the position of a real viewing window (5.1, 5.2, 5.3), in particular of a periscope (9.1, 9.2, 9.3) or external window, of the vehicle (1).

7. Method according to one of the preceding claims, **characterised in that** the marker (7.1, 7.2, 7.3) is arranged, in particular glued, on the viewing window (5.1, 5.2, 5.3).

8. Method according to one of the preceding claims, **characterised in that** the viewing direction and the position of the crew member (2) is determined via a head movement sensor (17), in particular an inertial sensor.

9. Method according to one of the preceding claims, **characterised in that** the camera (14) is arranged at the eye level of the crew member (2).

10. Method according to one of the preceding claims, **characterised in that** a camera (14) is used for each eye of the crew member (2).

11. Method according to one of the preceding claims, **characterised in that** the display device (14) shows a stereoscopic image.

12. Method according to one of the preceding claims, **characterised in that** a section of the virtual vehicle external environment is shown respectively at the positions of several views (5.1, 5.2, 5.3), wherein a marker (7.1, 7.2, 7.3) is assigned to each position.

13. Method according to one of the preceding claims, **characterised in that** the display device (15) completely covers the field of vision of the crew member (2).

14. Method according to one of the preceding claims, **characterised in that** the marker (7.1, 7.2, 7.3) carries a code pattern.

15. Method according to one of the preceding claims, **characterised in that** the code pattern is like a chess board.

16. Vehicle simulator for training a crew member (2) of a vehicle (1), in particular a military vehicle, in the vehicle interior (16), with a computer (4) that creates a virtual vehicle external environment, a camera (14) that can be worn head-mounted by the crew member (2) and films the vehicle interior (16), and a display device (15) that can be worn head-mounted by the crew member (2) and can be arranged in the field of vision of the crew member (2), wherein at the position of a view (5.1, 5.2, 5.3), a section of the virtual vehicle external environment that depends on the position and viewing direction of the crew member (2) can be faded in in the display device (15) by means of the computer (4), **characterised by** a marker (7.1, 7.2, 7.3), which can be arranged in the vehicle interior and defines a position of a view (5.1, 5.2, 5.3).

17. Vehicle simulator according to claim 16, **characterised by** the features of the characterising part of one or more of claims 2 to 15.

## Revendications

1. Procédé servant à former un membre d'équipage (2) d'un véhicule (1), en particulier d'un véhicule militaire, dans l'habitacle du véhicule (16), dans lequel un environnement extérieur virtuel du véhicule est généré, dans lequel le membre d'équipage (2) porte une caméra (14) solidaire de la tête, filmant l'habitacle du véhicule (16) et un dispositif d'affichage (15) solidaire de la tête, disposé dans le champ de vision du membre d'équipage (2), et dans lequel une partie de l'environnement extérieur virtuel du véhicule, dépendant de la position et de la ligne de visée du membre d'équipage (2), est affichée sur le dispositif d'affichage (15) au niveau de l'emplacement de la vue de l'extérieur (5.1, 5.2, 5.3), **caractérisé en ce que** l'emplacement de la vue de l'extérieur (5.1, 5.2, 5.3) est défini par l'intermédiaire d'un marqueur (7.1, 7.2, 7.3) disposé dans l'habitacle du véhicule (16).

2. Procédé selon la revendication 1, **caractérisé en ce que** l'image de la caméra est affichée sur le dispositif d'affichage (15), et **en ce que** la partie de l'environnement extérieur virtuel du véhicule est affichée sur l'image de la caméra.

3. Procédé selon la revendication 1, **caractérisé en ce que** le dispositif d'affichage (15) est réalisé en partie de manière transparente.

4. Procédé selon l'une quelconque des revendications précédentes, **caractérisé en ce que** le dispositif d'affichage (15) et/ou la caméra (14) font partie d'un visio-casque (6).

5. Procédé selon l'une quelconque des revendications précédentes, **caractérisé en ce que** le marqueur (7.1, 7.2, 7.3) est disposé au niveau de l'emplacement de la vue de l'extérieur (5.1, 5.2, 5.3).

6. Procédé selon l'une quelconque des revendications précédentes, **caractérisé en ce que** l'emplacement de la vue de l'extérieur se trouve à l'emplacement d'un hublot (5.1, 5.2, 5.3) réel, en particulier d'un pèriscope (9.1, 9.2, 9.3) ou d'une fenêtre extérieure, du véhicule (1).

7. Procédé selon l'une quelconque des revendications précédentes, **caractérisé en ce que** le marqueur (7.1, 7.2, 7.3) est disposé, en particulier est collé, sur le hublot (5.1, 5.2, 5.3).

8. Procédé selon l'une quelconque des revendications précédentes, **caractérisé en ce que** la ligne de visée et la position du membre d'équipage (2) sont déterminées par l'intermédiaire d'un détecteur de mouvement de tête (17), en particulier par l'intermédiaire d'un capteur inertiel.

9. Procédé selon l'une quelconque des revendications précédentes, **caractérisé en ce que** la caméra (14) est disposée à hauteur des yeux du membre d'équipage (2).

10. Procédé selon l'une quelconque des revendications précédentes, **caractérisé en ce qu'**une caméra (14) est utilisée pour chaque oeil du membre d'équipage (2).

11. Procédé selon l'une quelconque des revendications précédentes, **caractérisé en ce que** le dispositif d'affichage (14) affiche une image stéréoscopique.

12. Procédé selon l'une quelconque des revendications précédentes, **caractérisé en ce que** respectivement une partie de l'environnement extérieur virtuel du véhicule est affichée au niveau des emplacements de plusieurs vues de l'extérieur (5.1, 5.2, 5.3), un marqueur (7.1, 7.2, 7.3) étant associé à chaque emplacement.

13. Procédé selon l'une quelconque des revendications précédentes, **caractérisé en ce que** le dispositif d'affichage (15) masque en totalité le champ de vision du membre d'équipage (2).

14. Procédé selon l'une quelconque des revendications précédentes, **caractérisé en ce que** le marqueur (7.1, 7.2, 7.3) comporte un motif de code.

15. Procédé selon l'une quelconque des revendications précédentes, **caractérisé en ce que** le motif de code est de type à damiers.

16. Simulateur de véhicule servant à former un membre d'équipage (2) d'un véhicule (1), en particulier d'un véhicule militaire, dans l'habitacle du véhicule (16), comprenant un calculateur (4) générant un environnement extérieur virtuel du véhicule, une caméra (14) pouvant être portée de manière solidaire au niveau de la tête par le membre d'équipage (2) et filmant l'habitacle du véhicule (16), et un dispositif d'affichage (15) pouvant être porté de manière solidaire au niveau de la tête par le membre d'équipage (2) et pouvant être disposé dans le champ de vision du membre d'équipage (2), dans lequel une partie de l'environnement extérieur virtuel du véhicule, dépendant de la position et de la ligne de visée du membre d'équipage (2), peut être affichée sur le dispositif d'affichage (15) au moyen du calculateur (4) au niveau de l'emplacement d'une vue de l'extérieur (5.1, 5.2, 5.3), **caractérisé par** un marqueur (7.1, 7.2, 7.3) pouvant être disposé dans l'habitacle du véhicule, lequel marqueur définit un emplacement d'une vue de l'extérieur (5.1, 5.2, 5.3).

17. Simulateur de véhicule selon la revendication 16, **caractérisé par** les caractéristiques de la partie caractérisante d'une ou de plusieurs des revendications 2 à 15.
